(19) Europäisches Patentamt
European Patent Office
Office européen des brevets

(11) Publication number: **0 118 270**
**A2**

(12) # EUROPEAN PATENT APPLICATION

(21) Application number: 84301251.9

(22) Date of filing: 27.02.84

(51) Int. Cl.³: **C 08 G 59/50**

(30) Priority: 03.03.83 US 471938

(43) Date of publication of application: 12.09.84 Bulletin 84/37

(84) Designated Contracting States: BE CH DE FR GB IT LI NL SE

(71) Applicant: CELANESE CORPORATION
1211 Avenue of the Americas
New York New York 10036(US)

(72) Inventor: McClain, Roland R.
404 Clydebank Court
Middleton Kentucky(US)

(74) Representative: De Minvielle-Devaux, Ian Benedict Peter et al,
CARPMAELS & RANSFORD 43, Bloomsbury Square
London WC1A 2RA(GB)

(54) **Modified imidazole curing agent catalyst for epoxy resins.**

(57) A liquid curing agent for polyepoxides having terminal epoxide groups is made from a blend of a monomidazole and a mixture of 1,4-butanediol and trimethylolpropane. Cured compositions made from the curing agent and the polyepoxide are useful in various types of plastics applications.

EP 0 118 270 A2

0118270

# MODIFIED IMIDAZOLE CURING AGENT CATALYST FOR EPOXY RESINS

The invention lies in the field of polyepoxide resin technology. It provides a modified imidazole curing agent useful in the curing of such resin, and curable compositions comprising a mixture of such resin and such curing agent.

For many years in the epoxy plastics industry attempts have been made to ensure that two-component compositions possess a long pot life and at the same time a short cure time. In other words, it is particularly desirable that the cure response of the combined epoxide resin/curing agent mixture is such that it may be used for several hours at working temperatures without an inordinate increase in viscosity. It is also important that the polyepoxide compositions exhibit a short cure time, so that long, expensive cure schedules at elevated temperatures are not required. This combination of long pot life and short cure schedule is particularly necessary in various plastics end uses, including forming auto springs, filament wound pipe and tanks and other fibre reinforced components. To date, no one resin system has exhibited the desired ratios of pot life and cure time.

In addition to this desired combination of cure properties, general use plastics compositions should be non-staining, of low toxicity and in the cured state possess a high degree of chemical resistance. It is also necessary that the compositions maintain physical strength at elevated service temperatures and exhibit toughness at normal ambient temperatures.

In the prior art, solubility problems have made it extremely difficult to utilise normally solid, aliphatic polyols, particularly in 100% solids curing applications. Usually, normally solid polyols were incorporated into prior art epoxy-based compositions through the use of a solvent. However, when solvents are employed, increases in cure temperatures and times are required in order to drive the solvent off from the curing composition. In addition, as the solvent is removed during curing, voids can develop.

On the other hand, previously-available liquid polyols, such as ethylene glycol and glycerine, exhibit poor compatibility with most liquid epoxy systems.

In the prior art the use of imidazole type curing agents has been found to be particularly desirable where a combination of long pot life and short cure time is required. However, the incorporation of solid imidazole during agents into epoxide compositions has been particularly difficult because of their high reactivity with heated resin. Thus, like the polyol systems im the prior art, in order to incorporate solid imidazole catalysts, it has been necessary to employ a solvent. As a result, higher curing temperatures and longer curing times have been required in order to drive the solvent off from the finally cured system. And like other prior art solvent systems, voids can develop during curing.

An alternative method of utilising imidazole catalysts has been to dissolve them in the liquid epoxy resin at elevated temperatures. However, this procedure has resulted in greatly decreased pot lives and working times for these high temperature solubilised systems.

It has now suprisingly been found to be possible to provide a curing agent for use with polyepoxide resins which results in a unique combination of advantages.

This invention relates to imidazole type curing agents for polyepoxide resins. In particular, this invention provides polyepoxide resin curing agents made from a liquid blend of an imidazole and a mixture of trimethylolpropane and 1,4- butanediol. In another aspect, this invention relates to curable compositions made from polyepoxide resins and the imidazole type curing agents.

Among the advantages of the invention is that is curing agents are liquid, non-staining, low toxicity agents for polyepoxides which, when blended with polyepoxides, form curable systems which exhibit increased pot lives and, at the same time, relatively short, low-temperature cure schedules.

In addition, it is an advantage of this invention to provide thermoset plastic compositions with improved chemical resistance. Another advantage is to provide thermoset plastic compositions which exhibit a combination of elevated temperature strength and ultimate tensile strain capability at room temperature much improved over unmodified, catalytically cured epoxy resin plastics.

Further advantages will be apparent from the following description.

The curing agents of this invention are based on liquid blends of imidazoles, trimethylolpropane and 1,4-butanediol. The imidazole is preferably present in the curing agent in the amount of 25 to 50 weight percent based on the weight of the curing agent. The 1,4-butanediol and the trimethylolpropane are preferably present in the weight ratio of 2 to 1 part of 1,4-butanediol to 1 part of trimethylolpropane. It may be found appropriate to include water in the curing agent, in which case it may generally form up to 10 weight percent, based on the total weight of the curing agent.

Imidazoles are effective catalysts for promoting the addition of epoxide groups to aliphatic hydroxyl groups. The incorporation of small, but well defined amounts, of polyols into the catalytically cured, thermoset, epoxy resin matrix effectively reduces curing stress in the cross-linked plastic, resulting in an improved combination of heat distortion temperature and tensile strain at ambient temperatures.

The polyepoxides useful in this invention are liquid in nature and must be compatible, that is soluble in the polyol/imidazole blend. By liquid in nature, it is meant that in general the polyepoxides must have a maximum viscosity of 50,000 cps at room or ambient temperatures (25°C.). Preferably, the polyepoxide should have a maximum viscosity of 15,000 cps at ambient temperatures. In addition, the polyepoxides are based upon an aromatic polyol, polycarboxylic acid or aromatic polyamine. Finally, the polyepoxide material must contain terminal epoxide groups of the 1,2 or vicinal type.

Among the aromatic, phenolic polyepoxides useful in this invention are glycidyl polyethers of polyhydric phenols containing more than one 1,2-epoxide group per molecule. Such polyepoxide resins are generally derived from a polyhydric phenol and an epihalohydrin and generally have epoxide equivalent weights of 110 to 400. Examples of the epihalohydrins are epichlorohydrin, epibromohydrin, epiiohydrin; epichlorohydrin is preferred. The polyhydric phenols are exemplified by resorcinol, hydroquinone, p,p'-di(hydroxyphenyl) propane (or Bisphenol A as it is commonly called), p,p'-dihydroxybenzophenone, p,p'-dihydroxydiphenyl, p,p'-di(hydroxphenyl) ethane, bis(2-hydroxynaphthyl) methane, 1,5-dihydroxynaphthalene, phenolic novolacs and the like. Also included with the polyhydric phenols is hydrogenated Bisphenol A. These polyepoxide resins are well known in the art. Preferably the polyepoxide resins are made by reacting the epihalohydrin in an amount at least equal to the phenolic hydrogens, and most preferably in excess. The preferred polyepoxide resins are the glycidyl polyethers of Bisphenol A, having an epoxide equivalent weight of 170 to 200.

A second type of polyepoxide which is useful in the present invention is a glycidyl polyester prepared by reacting an epihalohydrin, such as epichlorohydin, with an aromatic or aromatic-based polycarboxylic acid, for example one of the phthalic or phthalic-based acids, and then dehydrohalogenating under reduced temperatures. The preparation of polyglycidyl esters is further described in U.S. Patent No: 3,859,314.

A third type of polyepoxide compound is the so-called amino polyepoxide prepared by reacting an aromatic polyamine, wherein the amine group is attached directly to the aromatic ring, with an epihalohydrin and then dehydrohalogenating using an added alkali compound, such as a caustic solution. Examples of the aromatic polyamines include aniline, o-, m- and p-toluidine and methylendianiline. The preparation of these materials is further described in U.S. Patent No: 3,310,528. Polyepoxides made from aminophenols are also useful in this invention.

Additional polyepoxide compounds which can be used in this invention to modify the other polyepoxides are polyglycidyl ethers of aliphatic polyols. Examples of polyols from which these polyglycidyl ethers are derived are ethylene glycol, propylene glycol, butylene glycol, glycerine, trimethylolethane, trimethylolpropane, pentaerythritol and the like. The polyglycidyl ethers are prepared as described in U.S. Patent No: 3,033,803. The polyglycidyl ethers of polyols may be blended with the other polyepoxides in amounts up to 30 weight percent of the blend in order to lower the viscosity of the polyepoxide composition and to modify the properties of the cured compositions.

Regardless of which type of polyepoxide is chosen, it is essential that the final product contain less than 0.5% by weight of hydrolysable chlorine. Hydrolysable chlorine is defined as that amount of chlorine which may be removed by alkaline catalysed hydrolysis. If greater than this amount of hydrolysable chlorine is present, the imidazole in the epoxide curing mixture may become salted with hydrochloric acid and lose its reactivity.

The first essential component of the present invention is either a liquid monoimidazole, such as 1-methylimidazole, which has the formula:

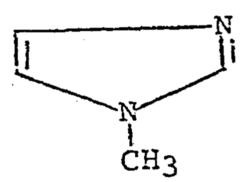

and has a melting point of -2°C., or a solid form unsubstituted imidazole or substituted imidazole which forms a liquid solution at room temperature (25°C.) with a blend of 1,4-butanediol and trimethylolpropane. Other preferred imidazoles include 2-methylimidazole, 2-ethyl-4-methylimidazole and 2-phenylimidazole.

As stated hereinbefore, the polyols useful in this invention are 1,4-butanediol and trimethylolpropane. These polyols are generally used in admixture with each other in the weight ratios of 2 to 1 part of 1,4-butanediol to 1 part of trimethylolpropane.

In preparing the curing agents of this invention, the polyols and the imidazole may be simply mixed together with or without moderate heating to form a liquid blend of the components. The curing agent will preferably contain 25 to 50 weight percent imidazole with the remainder being polyol. Such blends have been found to remain liquid on storage at room temperature (25°C.). In some instances, crystallisation will occur at lower temperature, e.g., 40°F. (4.4°C.) In order to prevent such crystallisation, up to 10 weight percent, based on the total weight of the curing agent, of water can be added as part of the polyol. This amount of water has been found to have no detrimental effect upon curing activity of the curing agent or the cured properties obtained with the curing agent and polyepoxide resins.

In preparing the cured compositions of this invention, the curing agent may be mixed with the polyepoxide resin in the amount of 2 to 6 parts (preferably 3.5 to 4 parts) by weight per 100 parts by weight of the polyepoxide resin. With respect to the components of the curing agent, the imidazole may be present in the curable composition in the amount of 1 to 3 parts (preferably 1.4 to 2 parts) by weight per 100 parts by weight of the polyepoxide resin. The amount of polyol used in the curable composition is based on the ratio of hydroxyl equivalents of the polyols (including water if present) to the epoxy equivalents of the polyepoxide resin. This ratio is 0.05 to 0.15 hydroxyl equivalent per epoxy equivalent and, preferably, 0.06 to 0.1 hydroxyl equivalent.

It has been found that a small amount, generally up to about 20 weight percent based on the weight of the polyepoxide resin, of a polyhydric phenol can be added to the curable composition to obtain increased flexibility in the resulting cured composition with a minimal decrease in heat distortion temperature and glass transition temperature (Tg). Such polyhydric phenols include catechol, resorcinol, hydroquinone, p,p'-di(hydroxyphenyl) propane, p,p'-dihydroxybenzophenone, p,p'-dihydroxydiphenyl, p,p'-di(hydroxyphenyl) ethane, bis(2-hydroxynaphthyl) methane, p,p'-di(hydroxyphenyl)

sulfone, and the like. The sulfur analogues of these phenols can also be used.

In addition to the above-described components, the curable compositions of this invention can be modified with minor amounts of other active hydrogen containing reactants, including other polyols, as well as substituted ureas, polycarboxylic acids and the like.

The curable compositions of this invention may be modified with conventional pigments, reinforcing agents, fibres, fillers and other materials well known in the art. Fibreglass, quartz and other siliceous materials constitute a particularly useful class of reinforcing fibres and mineral fillers for modification of the resin-curing agent compositions described herein.

The curable compositions of this invention have extended pot lives - at room temperature as long as eight hours - and may even be used at elevated temperatures. For example, the mixed compositions of this invention may be used at a pot temperature of 100°F. (38°C.), with a working life of as much as four hours. In addition, the materials of the present invention exhibit improved heat distortion temperatures, particularly if blended with siliceous or alumina type fillers and reinforcements. The term siliceous filler and reinforcement includes silicas, silicates and silicon containing glasses in the form of particulate minerals and fibres.

The polyol/imidazole curing agents of the invention also exhibit outstanding reactivity at elevated curing temperatures, which is intermediate between amine cured epoxide systems and anhydride cured epoxide systems. The chemical resistance, thermal stability and physical strength of these materials is comparable to other cured epoxides and is superior to vinyl ester systems.

The compositions of the present invention may be used in casting, moulding, filament winding, pultrusion and virtually any type of plastics end use application where a relatively long pot life and relatively high curing reactivity are desired. As previously pointed out, the cured compositions

of the present invention are particularly useful in chemically-resistant pipes and fittings, as cast tools, moulds, bench tops, fibre reinforcing composites, automobile suspension springs, filament windings and the like.

The following Examples illustrate the invention in more detail. Parts and percentages are by weight, unless otherwise specified.

EXAMPLE 1

Imidazole (47.5%) was blended with 27.55% 1,4-butanediol, 19.65% trimethylolpropane and 5.3% water to form a modified imidazole curing agent. This curing agent had a viscosity of 120 cps at 25°C., a specific gravity at 25°C. of 1.09 and a colour, Gardner-Holdt, of 2-3. This curing agent (3.6 parts) was blended with 100 parts of a polyepoxide resin (the diglycidyl ether of Bisphenol A having a viscosity of 9,100 cps at 25°C. and a weight per epoxide of 186). The properties of this mixed system were:

| | |
|---|---|
| Viscosity at 25°C. | 6700 cps |
| Viscosity at 32°C. | 2130 cps |
| Viscosity at 41°C. | 760 cps |
| | |
| Specific Gravity at 25°C. | |
| Uncured | 1.16 |
| Cured | 1.19 |
| | |
| Gel Time, Stroke Method | |
| at 120°C. | 165 seconds |
| at 149°C. | 54 seconds |
| at 177°C. | 25 seconds |

Castings, 1/8 inch (3.2 mm) thick, were prepared from the curing agent/polyepoxide resin system and were cured for 1 hour at 93°C. plus 1 hour at 150°C. The properties of the cured castings were as follows:

| | |
|---|---|
| Ultimate Tensile Strength | 7500 psi (51710 kPa) |
| Tensile Elongation at Break | 2.7% |
| Ultimate Flexural Strength | 16,100 psi (111009 kPa) |
| Initial Flexural Modulus | 390,000 psi (2689050 kPa) |
| Hardness, Shore D | 88 |
| Izod impact Strength | 0.26 ft.lbs./inch |
| 24 Hours Water Absorption | 0.21% |
| Heat Distortion Temperature | |
| Dry | 149°C. |
| After 24 Hour Water Boil | 122°C. |

Glass reinforced composites were made into compression moulded plaques and NOL Rings. The compression moulded plaques were made from 0° filament wound E-Glass composites mould cured for 2 hours at 135°C. The properties of these plaques were as follows:

| | |
|---|---|
| Glass Content | 52% by Volume |
| Void Content | 0.9% by Volume |

| | |
|---|---|
| Interlaminar Shear Strength | |
| at 25°C. | 7600 psi (52400 kPa) |
| at 121°C. | 4600 psi (31720 kPa) |
| at 150°C. | 3200 psi (22060 kPa) |

Fatigue Resistance

(Cycled between 1000 psi and 90,000 psi (6895 kPa and 620550 kPa) fibre stress at 5 Hz.)

Load bearing loss after 500,000 cycles $<1\%$

NOL Rings were made from filament wound E-Glass cured for 2 hour at 93°C. plus 1 hour at 150°C. The properties of the rings were as follows:

| | |
|---|---|
| Glass Content | 50% by Volume |
| Void Content | <0.5% by Volume |
| Flexural Strength | |
| at 25°C. | 157 ksi |
| at 121°C. | 95 ksi |
| at 150°C. | 64 ksi |
| Interlaminar Shear Strength | |
| at 25°C. | 9400 psi (64800 kPa) |

EXAMPLE 2

The curing agent described in Example 1 (in amounts of 3.5 parts and 4.0 parts) was blended with 100 parts of the polyepoxide resin described in Example 1. The gel time at 150°C. and the heat distortion temperature (HDT) at various cure schedules was determined on 1/8 inch (3.2 mm) thick resin castings cast into moulds pre-conditioned at 93°C. After the below-indicated cure schedule, the castings were immediately cooled and were tested for HDT in accordance with ASTM D-648 (264 psi (1820 kPa) stress).

| Curing Agent Parts | 150°C. Gel Time | Cure Schedule: Minutes at 93°C. | 120°C. | 150°C. | 175°C. | 200°C. | HDT °C. |
|---|---|---|---|---|---|---|---|
| 3.5 | 57 sec | 60 | | | | | 116 |
| | | 60 | 60 | | | | 113 |
| | | 60 | | 30 | | | 145 |
| | | 60 | | 60 | | | 149 |
| | | 60 | | 120 | | | 153 |
| | | 60 | | | 30 | | 143 |
| | | 60 | | | 60 | | 141 |
| | | 60 | | | | 30 | 140 |
| | | 15 | | 60 | | | 148 |
| 4.0 | 52 sec | 10 | | 60 | | | 147 |
| | | 60 | | 60 | | | 150 |

EXAMPLE 3

The curing agent described in Example 1 was blended with several polyepoxide resins. The viscosity of the blends initially and after standing at 23°C. was determined. The physical properties were determined on 1/8 inch (3.2 mm) thick castings cured for 1 hour at 93°C. plus 1 hour at 150°C.

The polyepoxides used in this Example were:

Epoxy A - diglycidyl ether of Bisphenol A having an epoxide equivalent weight of 186 and a viscosity of 9100 cps at 25°C.

Epoxy B - diglycidyl ether of Bisphenol A having an epoxide equivalent weight of 190 and a viscosity of 14,000 cps at 25°C.

Epoxy C - 90 parts of Epoxy A and 10 parts of a glycidyl polyether of a novolac resin having an epoxide equivalent weight of 188 and a functionality of 2.8.

Epoxy D - 90 parts of Epoxy B and 10 parts of diglycidyl ether of 1,4-butanediol having an epoxide equivalent weight of 130 and a viscosity at 25°C. of 15 cps.

Physical Properties

| Composition (parts) | A | B | C | D |
|---|---|---|---|---|
| Epoxy A | 100 | | | |
| Epoxy B | | 100 | | |
| Epoxy C | | | 100 | |
| Epoxy D | | | | 100 |
| Curing Agent | 3.5 | 3.5 | 4.0 | 3.5 |

| Handling Properties | A | B | C | D |
|---|---|---|---|---|
| Viscosity at 23°C. (cps) | | | | |
| Initial | 6,700 | 8,500 | 8,200 | 1,900 |
| After 4 hrs. at 23°C. | ---- | 11,200 | 9,200 | ---- |
| After 6 hrs. at 23°C. | ---- | 17,200 | 16,100 | ---- |
| After 8 hrs. at 23°C. | ---- | 32,700 | 30,000 | ---- |
| After 24 hrs. at 23°C. | ---- | 18 X $10^6$ | 20 X $10^6$ | ---- |

| Cured State Properties | A | B | C | D |
|---|---|---|---|---|
| Tensile Strength (psi) | 7,700 | 7,500 | 7,400 | 8,600 |
| (kPa) | 53090 | 51710 | 51020 | 59300 |
| Tensile Elongation at Break | 2.9% | 2.7% | 2.5% | 2.6% |
| Flexural Strength (psi) | 16,100 | 15,400 | 16,100 | 16,300 |
| (kPa) | 111010 | 106180 | 111010 | 112390 |
| Initial Flexural Modulus($10^6$ psi) | 0.39 | 0.39 | 0.39 | 0.36 |
| ($10^6$ kPa) | 2.69 | 2.69 | 2.69 | 2.48 |
| Hardness, Shore D | 88 | 85 | 85 | 85 |
| Izod Impact Strength (ft.lbs./in. Notch) | 0.26 | 0.25 | 0.25 | 0.28 |
| Heat Distortion Temperature (°C.) | 148 | 140 | 152 | 127 |
| 24 Hr. Water Absorption (%) | 0.21 | 0.21 | 0.19 | 0.22 |

## EXAMPLE 4

A curing agent was made from 34 parts of imidazole, 44 parts of 1,4-butanediol and 22 parts of trimethylolpropane. Five parts of this curing agent were blended with 100 parts of Epoxy A of Example 3. The gel time, stroke method, at 149°C. was 60 seconds. The heat distortion temperature, determined on castings prepared and cured as described in Example 3, was 138°C.

EXAMPLE 5

A curing agent was made from 50 parts of imidazole, 30 parts of 1,4-butanediol and 20 parts of trimethylolpropane. This curing agent, 3.4 parts, was blended with 100 parts of Epoxy A of Example 3. The gel time, stroke method, at 149°C. was 54 seconds. The heat distortion temperature, determined on castings prepared and cured as described in Example 3, was 149°C.

EXAMPLE 6

To 100 parts of Epoxy A of Example 3 were added 10 parts of Bisphenol A. The diphenol was dissolved in the polyepoxide resin by heating up to about 93°C. with agitation. When all of the diphenol was dissolved, the resin solution was allowed to cool to room temperature. The viscosity of the resin solution was determined and the curing agent described in Example 1 (3.6 parts) was added. The gel time at 149°C. was determined on a portion of the composition. Physical properties were determined on 1/8 inch (3.2 mm) thick castings cured for 1 hour at 93°C. plus 1 hour at 150°C.

Additional resin blends were made from Epoxy A plus resorcinol, catechol and hydroquinone using the same procedure as described above. These blends were cured in the same manner as described above and their physical properties were determined.

Details of the blends and the cured properties are as follows:

| Example 6 | A | B | C | D | E |
|---|---|---|---|---|---|
| Resin Portion, parts | | | | | |
| Epoxy A | 100 | 100 | 100 | 100 | 100 |
| Bisphenol A | | 10 | | | |
| Resorcinol | | | 5 | | |
| Catechol | | | | 5 | |
| Hydroquinone | | | | | 5 |
| Curing Agent, parts | 3.6 | 3.6 | 3.6 | 3.6 | 3.6 |
| Viscosity at 24°C ( cps) | | | | | |
| Resin Portion | 9,100 | 20,600 | 19,700 | 9,030 | 13,800 |
| Curing Agent | 120 | 120 | 120 | 120 | 120 |
| Gel Time, Stroke, 149°C. | 54" | 35" | | | |
| Cured State Properties | | | | | |
| Tensile Strength (psi) | 7,500 | 9,400 | 9,600 | 10,600 | 8,700 |
| (kPa) | 51710 | 64800 | 66190 | 73090 | 59990 |
| Tensile Elongation at Break (%) | 2.7 | 4.1 | 3.9 | 5.0 | 3.6 |
| Heat Distortion Temp. (°C,) | 148 | 128 | 130 | 122 | 129 |

EXAMPLE 7

Resorcinol (5 parts) was dissolved in 3.6 parts of the curing agent of Example 1 forming a solution having a viscosity at 24°C. of 2300 cps. This modified curing agent was blended with 100 parts of Epoxy A of Example 3. The gel time of this blend by the stroke method was 44 seconds at 149°C. One-eighth inch (3.2 mm) thick castings were made and cured for 1 hour at 93°C. plus 1 hour at 150°C. The tensile strength of the cured composition was 10,200 psi (70330 kPa), the tensile elongation at the break was 4.4% and the heat distortion temperature was 121°C.

The principles, preferred embodiments and modes of operation of the present invention have been described in the foregoing specification. The invention which is intended to protected herein, however, is not to be construed as limited to the particular forms disclosed, since these are to be regarded as illustrative rather than restrictive. Variations and changes may be made by those skilled in the art without departing from the spirit of the invention.

CLAIMS:

1. A curing agent for polyepoxide resins comprising a liquid blend of a monoimidazole compound and a polyol mixture of 1,4-butanediol and trimethylolpropane.

2. The curing agent of claim 1 wherein the weight ratio of the 1,4-butanediol to the trimethylolpropane is 2:1 to 1:1.

3. The curing agent of claim 1 or 2 wherein the amount of the monoimidazole compound is 25 to 50 weight percent based on the weight of the curing agent.

4. The curing agent of any of claims 1 - 3 which also contains water.

5. The curing agent of claim 4 wherein the amount of water is up to 10 weight percent based on the weight of curing agent.

6. The curing agent of any of claims 1 - 5 wherein the monoimidazole compound is selected from imidazole, 1-methylimidazole, 2-methylimidazole, 2-ethyl-4-methylimidazole and 2-phenylimidazole.

7. A curable polyepoxide composition comprising a compatible mixture of a polyepoxide resin having terminal 1,2-epoxy groups and the curing agent of any of claims 1 - 6.

8. The composition of claim 7 wherein the polyepoxide resin is a polyglycidyl ether of p,p'-di(hydroxyphenyl) propane.

9. The composition of claim 7 or 8 wherein the amount of the curing agent is 2 to 6 parts by weight per 100 parts by weight of the polyepoxide resin.

10. The composition of any of claims 7 - 9 which contains a polyhydric phenol in an amount up to 20 weight percent based on the weight of the polyepoxide resin.

11. The composition of claim 10 wherein the polyhydric phenol is p,p'-di(hydroxyphenyl)propane, resorcinol or catechol.

12. The composition of any of claims 7 - 11 wherein a siliceous filler or fibrous reinforcement is added.

13. A process for forming a cured composition which comprises:

(a) forming a liquid mixture from a mono-imidazole and a polyol mixture of 1,4-butanediol and trimethylolpropane;

(b) blending the resulting liquid with a liquid polyepoxide; and

(c) curing the resulting blend.